# EUROPÄISCHE PATENTSCHRIFT

(11) **EP 1 879 674 B1**
(45) Veröffentlichungstag und Bekanntmachung des Hinweises auf die Patenterteilung: **13.10.2010**
(21) Anmeldenummer: 06743256.7
(22) Anmeldetag: 06.04.2006
(51) Int. Cl.: B01B 1/00, F28F 3/08, F28D 9/00, B01B 1/06

(54) **MIKROVERDAMPFER**
MICRO-EVAPORATOR
MICROEVAPORATEUR

(30) Priorität: 15.04.2005 DE 102005017452
(43) Veröffentlichungstag der Anmeldung: 23.01.2008
(73) Patentinhaber: INSTITUT FÜR MIKROTECHNIK MAINZ GmbH, 55129 Mainz (DE)
(72) Erfinder: KOLB, Gunther, 67433 Neustadt (DE); TIEMANN, David, 55239 Gau-odernheim (DE)
(74) Vertreter: Fuchs
(86) Internationale Anmeldenummer: PCT/EP2006/061393
(87) Internationale Veröffentlichungsnummer: WO 2006/108796

(56) Entgegenhaltungen:
- EP-A- 1 148 772
- DE-A- 19 963 594
- US-A- 3 817 321
- US-A1- 2001 045 269
- US-A1- 2001 045 269
- US-A1- 2003 151 896
- US-A1- 2003 151 896

## Beschreibung

Die Erfindung betrifft einen Mikroverdampfer gemäß dem Oberbegriff des Patentanspruchs 1.

Mikroverdampfer werden eingesetzt, um flüssige Medien, wie z. B. Wasser, Alkohole oder Alkohol-Wassergemische, Flüssiggase oder flüssige Alkane für eine Weiterverarbeitung zu verdampfen. Solche Mikroverdampfer werden beispielsweise im Bereich der Brennstoffzellentechnik eingesetzt.

Verdampfer sind in verschiedenen Bauweisen bisher bekannt geworden. Sogenannte Plattenwärmeübertrager sind nach Art von Filterpressen aus gewellten, mit Kanälen für die Übertragungsflüssigkeit versehenen Stahlplatten zusammengesetzt. Widerstandsfähige Gummidichtungen halten die Platten auf Distanz und dichten die Kanäle der beiden Fluide gegeneinander ab. Wegen der Gummidichtungen sind die Plattenwärmeübertrager auf eine maximale Temperatur von 250°C begrenzt. Die beiden Fluide fließen im Gleich- oder Gegenstrom als dünne Schichten abwechselnd auf- oder abwärts durch die Kammerreihen und stehen an beiden Kammerwänden miteinander in Kontakt. Gewellte Plattenprofile erhöhen die Turbulenzen und verbessern die Wärmeübergangszahlen. Derartige Verdampfer sind nicht kompakt und haben, wenn sie mit Heizgas betrieben werden, niedrige Leistungsdichten. Derartige Plattenwärmeübertrager sind beispielsweise aus Vauck/Müller; Grundoperation der Verfahrenstechnik; Leipzig 1994 bekannt.

Die US 3,817,321 offenbart eine Blasenpumpe zur Kühlung von Thyristoren, die eine Rippenanordnung aufweist, durch die die Kühlflüssigkeit strömt. Es handelt sich um eine Anordnung mit Abmessungen im cm-Bereich, wobei lediglich ein Teil der Kühlflüssigkeit verdampfen kann. Um eine Strömungsrichtung vorzugeben, ist eine Vergrößerung des Querschnitts zwischen den Rippen vorgesehen. Rückstaueffekte können nicht ausgeschlossen werden.

Die US 2003/0151896 A1 beschreibt eine Einrichtung zur Kühlung von Halbleitern. Der Querschnitt der Kanäle erweitert sich in Strömungsrichtung und der Austrittsbereich ist gleich groß gewählt wie der Eintrittsbereich.

Ein Verdampfer mit mikrostrukturierten Komponenten zur teilweisen oder vollständigen Verdampfung von Flüssigkeiten ist beispielsweise aus der US 6,126,723 bekannt. Der Reaktor besteht aus zwei Fluidräumen für ein erstes und ein zweites Fluid, wobei die Fluidräume über eine poröse oder mit mikrostrukturierten Löchern versehene Platte verbunden sind. Der Reaktor ist für die Übertragung eines in einem ersten Fluid enthaltenen Arbeitsfluids in ein zweites Fluid gedacht, wobei die mit mikrostrukturierten Löchern versehenen Platten nur für das Arbeitsfluid durchlässig sind. Dieser Reaktor kann auch als Verdampfer eingesetzt werden.

Aus DE 199 63 594 A1 und DE 100 10 400 C2 sind Vorrichtungen in Mikrostrukturtechnik zum Hindurchleiten von Medien bekannt, die insbesondere zum Verdampfen flüssiger Medien geeignet sind.

Die Vorrichtung gemäß DE 199 63 594 A1 weist einen schichtförmigen Aufbau auf, wobei wenigstens eine erste Schicht eine Anzahl von Mikrokanälen aufweist, durch die das zu verdampfende Medium strömt. In einer zweiten Schicht ist ebenfalls eine Anzahl von Mikrokanälen angeordnet, durch die ein Wärmeträgermedium strömt. Die Mikrokanäle weisen jeweils eine Eintrittsöffnung und eine Austrittsöffnung auf. Um eine zufriedenstellende Verdampfung des flüssigen Mediums zu erreichen, ist vorgesehen, dass die Austrittsöffnungen der Mikrokanäle für das zu verdampfende Medium flächenmäßig kleiner sind und/oder mit geometrisch anderer Form ausgebildet sind als deren jeweilige Eintrittsöffnungen. Dadurch wird der Druck des flüssigen Mediums in den Mikrokanälen erhöht, so dass das überhitzte, noch flüssige Medium nach dem Austritt aus den flächenmäßig kleineren Austrittsöffnungen schlagartig vom flüssigen in den dampfförmigen Zustand übergeht.

Gemäß der DE 100 10 400 C2 ist vorgesehen, dass zur Einstellung eines gewünschten Temperaturprofils auf den Oberflächen der Durchströmungskanäle zumindest in einzelnen Bereichen der Durchströmkanäle in Strömungsrichtung unabhängig von anderen Bereichen die Heizleistung der Erhitzungseinrichtung bereichsweise einstellbar ist.

Gemäß dieses Standes der Technik sind die Mikrokanäle zur Führung der zu verdampfenden Flüssigkeit parallel nebeneinander angeordnet. Der Nachteil dieser Mikroverdampfer besteht darin, dass Dampfstöße und Dampfblasen auftreten können, wenn nicht der optimale Temperaturbereich eingestellt wird. Hierbei ist der optimale Arbeitspunkt zu beachten, was die Abstimmung mehrerer Parameter erfordert, wie z. B. Strömungsgeschwindigkeit und Druck des zu verdampfenden Mediums, Heizleistung usw. Derartige Mikroverdampfer sind daher störanfällig und nicht flexibel einsetzbar.

Aufgabe der Erfindung ist es, einen Mikroverdampfer zur Verfügung zu stellen, der einfacher handhabbar ist und über einen größeren Temperaturbereich störungsfrei betrieben werden kann.

Diese Aufgabe wird mit einem Mikroverdampfer gelöst, bei dem die Mikroverdampferkanäle in einem trapezförmigen Bereich angeordnet sind, der einen in die Flüssigkeitszuführkammer mündenden querschnittskleineren Eintrittsbereich und einen in die Dampfsammelkammer mündenden querschnittsgrößeren Austrittsbereich aufweist, bei dem die Mikroverdampferkanäle über ihre gesamte Länge einen konstanten Querschnitt aufweisen und bei dem die Mikroverdampferkanäle einen Querschnitt von 100 µm² bis 0,0025 mm² aufweisen.

Durch die Anordnung der Mikroverdampferkanäle in einem trapezförmigen Bereich, liegen die Eintrittsöffnungen der Mikroverdampferkanäle dicht nebeneinander. Die Breite der die Mikroverdampferkanäle trennenden Stege kann in dem Eintrittsbereich des trapezförmigen Bereiches auf 0 auslaufen. Die in der Zuführkammer befindliche Flüssigkeit wird daher sehr schnell abgeführt, wodurch eine vorzeitige Verdampfung bereits in der Zuführkammer wirksam vermieden wird.

Der Austrittsbereich des trapezförmigen Bereiches ist größer als der Eintrittsbereich, was den Vorteil hat, dass die Austrittsöffnungen der Mikroverdampferkanäle deutlich beabstandet sind und somit der Dampf bzw. der überhitzte Dampf, der ein Vielfaches des Volumens der Ausgangsflüssigkeit aufweist, ungehindert in den entsprechenden großvolumigen Raum der Dampfsammelkammer austreten kann. Dadurch wird ein Überdruck im Austrittsbereich und ein eventuelles Zurückdrücken der Flüssigkeitssäulen in den Mikroverdampferkanälen entgegen der Strömungsrichtung vermieden, was zu einem störungsfreien Betrieb beiträgt.

Es hat sich gezeigt, dass der Mikroverdampfer über einen großen Temperaturbereich, der bei Wasser im Bereich von 100°C bis 500°C liegt, problemlos betrieben werden kann. Der Mikroverdampfer reagiert unsensibel auf Parameteränderungen, wobei bei gegebener Beheizungstemperatur eine Änderung des Massenstroms des zu verdampfenden Mediums unkritisch ist.

Ein weiterer Vorteil des Mikroverdampfers besteht darin, dass er lageunabhängig betrieben werden kann.

Weitere Vorteile bestehen in der großen Kompaktheit und der hohen Energiedichte. Außerdem ist ein trägergasfreier Betrieb möglich. Eine Beheizung mit Heizgas ist möglich, dessen Temperatur bis zu mehrere 100°C über der Siedetemperatur der verdampften Flüssigkeit liegen kann. Weiterhin ist auch eine Beheizung durch eine chemische Reaktion möglich, deren Reaktionstemperatur bis zu mehreren 100°C über der Siedetemperatur der zu verdampfenden Flüssigkeit liegen kann. Eine Verdampfung ist auch bei Heiztemperaturen wenig oberhalb der Verdampfungstemperatur des zu verdampfenden Mediums möglich, was im Hinblick auf geringen Energieverbrauch vorteilhaft ist. Der Mikroverdampfer kann in einem variablen Druckbereich der zu verdampfenden Flüssigkeit betrieben werden.

Vorzugsweise sind die Mikroverdampferkanäle in dem trapezförmigen Bereich fächerförmig angeordnet. Dies bedeutet, dass die Mikroverdampferkanäle strahlenförmig von der Flüssigkeitszuführkammer abgehen und mit deutlichem Abstand voneinander in die Dampfsammelkammer einmünden.

Die Mikroverdampferkanäle weisen einen Querschnitt von 100 µm² bis 0,0025 mm² auf. Bei quadratischen Mikroverdampferkanälen entspricht dies Kantenlängen von 10 µm bis 50 µm. Aufgrund dieser geringen Abmessungen der Mikroverdampferkanäle wird ein sehr hohes Kontaktffächen/Volumenverhältnis erzielt, wodurch ein hoher Wärmeübergang erreicht wird, der zu einer raschen Verdampfung der Flüssigkeit führt. Durch die kleinen Abmessungen der Mikroverdampferkanäle insbesondere in dem Bereich, wo der Flüssig-/Gasübergang stattfindet, werden Siedeverzüge vermieden, was eine gleichmäßige Verdampfung erst möglich macht.

Die Mikroverdampferkanäle können beispielsweise durch Erodieren, Abformen, Laserablation oder andere Bearbeitungsverfahren hergestellt werden.

Die Mikroverdampferkanäle können einen geradlinigen Verlauf oder einen mäanderförmigen Verlauf besitzen. Mäanderförmige oder wellenförmige Mikroverdampferkanäle haben den Vorteil, dass während der Durchströmung aufgrund der Kanalwindungen ein stärkerer Kontakt der zu verdampfenden Flüssigkeit mit der Kanalwandung stattfindet. Dadurch wird ein weitaus verbesserter Wärmeübergang erzielt. Außerdem hat die mäanderförmige Anordnung und Ausgestaltung der Mikroverdampferkanäle den Vorteil, dass trotz einer großen Länge der Mikroverdampferkanäle eine kompakte Bauweise realisiert werden kann.

Bei diesen Ausgestaltungen der Mikroverdampferkanäle nimmt der Abstand der Mikroverdampferkanäle in Richtung zur Dampfsammelkammer zu.

Vorzugsweise besitzt die Dampfsammelkammer ein größeres Volumen als die Flüssigkeitszuführkammer.

Die Mittel zum Erhitzen der zu verdampfenden Flüssigkeit sind vorzugsweise mindestens im Bereich unter und/oder über den Mikroverdampferkanälen angeordnet. Durch diese Anordnung kann vorzugsweise der zu erhitzende Bereich auf den Bereich konzentriert werden, wo die Mikroverdampfungskanäle angeordnet sind. Aufgrund der relativ schnellen Abführung der zu verdampfenden Flüssigkeit aus der Zuführkammer in die Mikroverdampferkanäle, ist es jedoch unkritisch, den gesamten Mikroverdampfer entsprechend zu beheizen.

Vorzugsweise umfassen die Mittel zum Erhitzen Mikrobeheizungskanäle, elektrische Heizpatronen oder auch Lampen, wie z. B. Quarzlampen. Die Beheizung erfolgt in diesem Fall über Strahlungsenergie.

Eine bevorzugte Ausführungsform des Mikroverdampfers ist gekennzeichnet durch mindestens eine Verdampferplatte, die auf der Vorderseite die Struktur der Flüssigkeitszuführkammer, der Mikroverdampfungskanäle und des Dampfsammelraums aufweist. Die wesentlichen Komponenten können daher auf einer Platte angeordnet werden, was die Herstellung des Mikroverdampfers vereinfacht und auch eine modulare Bauweise ermöglicht, in der eine Vielzahl solcher Platten übereinander angeordnet sein können, wobei die Verdampferplatten lediglich durch einfache, vorzugsweise nicht strukturierte Zwischenplatten von einander getrennt sind.

Einen weiteren Beitrag zur kompakten Bauweise und zur vereinfachten Herstellung des Mikroverdampfers trägt die Maßnahme bei, dass die Verdampferplatte vorzugsweise auf ihrer Rückseite Mikrobeheizungskanäle aufweist.

Diese Mikrobeheizungskanäle besitzen vorzugsweise Querschnitte im Bereich von 0,1 mm bis 10 mm.

Die Mikrobeheizungskanäle können mit einem Katalysatormaterial beschichtet sein. Die Beheizung kann in diesem Fall durch katalytische Verbrennung erfolgen.

Die Mikrobeheizungskanäle sind vorzugsweise parallel zueinander angeordnet und erstrecken sich vorzugsweise in derselben Richtung wie die Mikroverdampferkanäle. Die selbe Ausrichtung der Mikrobeheizungskanäle bedeutet, dass sich sowohl die Mikrobeheizungskanäle als auch die Mikroverdampferkanäle im Wesentlichen in Längsrichtung der Platte erstrecken. Die Mikrobeheizungskanäle können bezüglich der Strömungsrichtung der zu verdampfenden Flüssigkeit im Gleichstrom oder auch im Gegenstrom betrieben werden. Dies hängt zum einen von der Mikrobeheizungsflüssigkeit und zum anderen auch von der zu verdampfenden Flüssigkeit und dem erforderlichen Wärmeübertrag ab.

Vorzugsweise ist die Restwandstärke der Verdampferplatte ≤1 mm, was den Vorteil hat, dass ein guter Wärmeübergang zwischen dem Beheizungsmedium und der zu verdampfenden Flüssigkeit erfolgen kann.

Beispielhafte Ausführungsformen der Erfindung werden nachfolgend anhand der Zeichnungen näher erläutert. Es zeigen:
- Fig. 1: eine Explosionsdarstellung eines Mikroverdampfers gemäß einer ersten Ausführungsform,
- Fig. 2: die Draufsicht auf eine Mikroverdampferplatte des in Fig. 1 gezeigten Mikroverdampfers,
- Fign. 3a - c: vergrößerte Ausschnitte aus der Draufsicht der Mikroverdampferplatte gemäß Fig. 2,
- Fign. 4, 5: vergrößerte Ausschnitte in schematischer Darstellung der Mikroverdampferplatte zur Veranschaulichung unterschiedli- cher Ausführungsformen der Mikroverdampferkanäle,
- Fig. 6: die Unterseite einer Verdampferplatte in perspektivischer Darstellung,
- Fign. 7a und b: perspektivische Drauf- und Unteransichten auf einen Mikro- verdampfer gemäß einer weiteren Ausführungsform, und
- Fig. 8: die schematische Darstellung einer Verdampferanlage unter Verwendung eines erfindungsgemäßen Mikroverdampfers.

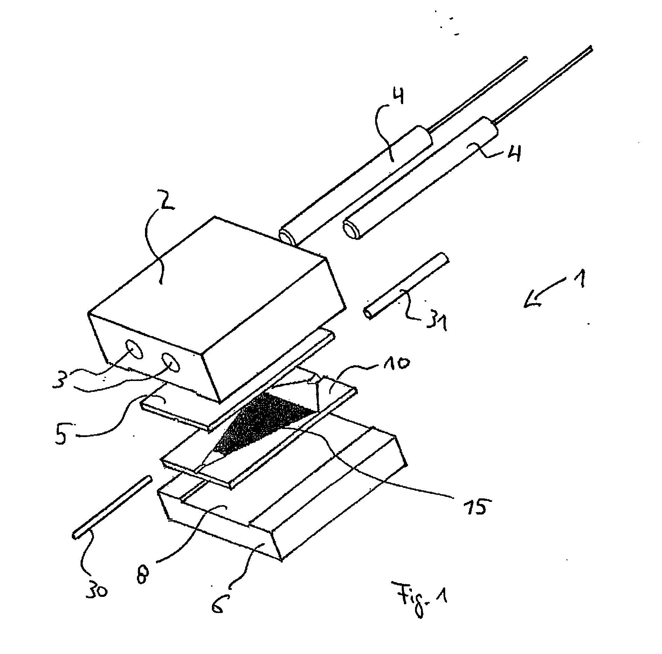

In der Figur 1 ist ein Mikroverdampfer 1 dargestellt, der von oben nach unten eine Heizplatte 2 mit Bohrungen 3 zur Aufnahme von Heizelementen 4, eine Deckplatte 5, eine Mikroverdampferplatte 10 und eine Bodenplatte 6 aufweist. Die Deckplatte 5 liegt auf der Mikroverdampferplatte 10 auf, die mikrostrukturierte Mikroverdampferkanäle 20 in einem trapezförmigen Bereich 15 aufweist, wie dies im Zusammenhang mit den nachfolgenden Figuren im Einzelnen erläutert wird.

Die Mikroverdampferplatte 10, in der die Verdampfung der zu verdampfenden Flüssigkeit stattfindet, ist zum einen an eine Zuführleitung 30 für die zu verdampfende Flüssigkeit und zum anderen an eine Abführleitung 31 zur Abführung des Dampfes angeschlossen. Die Mikroverdampferplatte 10 selbst ist in einer nutartigen Vertiefung 8 der Bodenplatte 6 angeordnet. Es wird dadurch insgesamt ein quaderförmiger Mikroverdampfer mit Außenabmessungen unter 50 mm geschaffen, der durch Ergänzen weiterer Mikroverdampferplatten 10 und Zwischenlegen von Zwischenplatten 7, wie dies im Zusammenhang mit den Figuren 9a, 9b erläutert wird, erweiterbar ist.

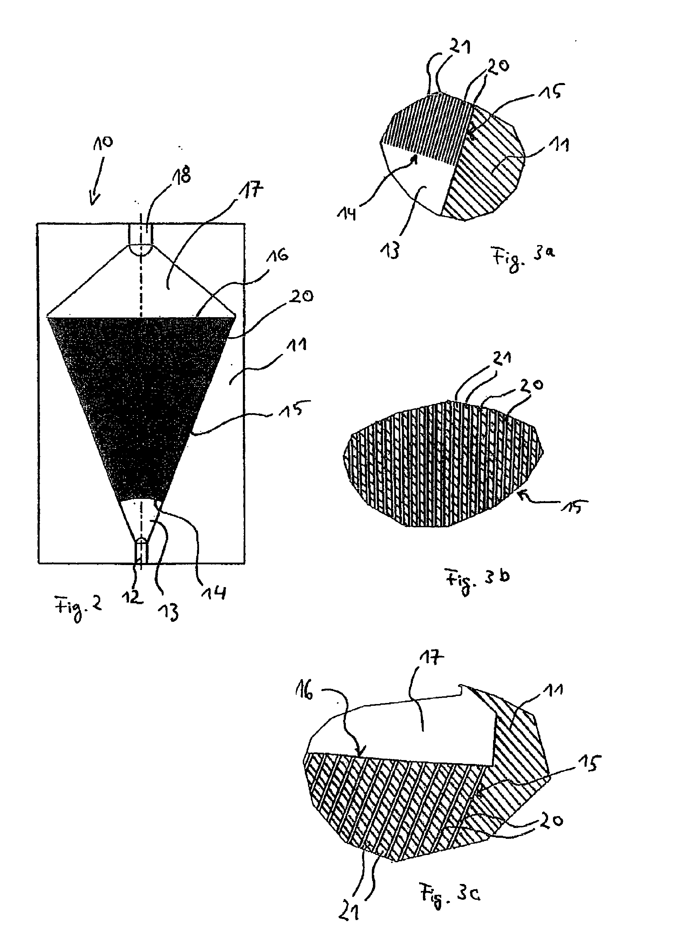

In der Figur 2 ist die Draufsicht auf die Vorderseite 11 der in der Figur 1 gezeigten Mikroverdampferplatte 10 dargestellt, die aus einem gut wärmeleitenden Material, wie z. B. Stahl, besteht. Von unten nach oben ist ein Einlass 12 zu sehen, der in eine Flüssigkeitszuführkammer 13 mündet. Die Flüssigkeitszuführkammer 13 erweitert sich in Strömungsrichtung und besitzt einen bogenförmigen Endbereich, an dem der ebenfalls bogenförmige Eintrittsbereich 14 des trapezförmigen Bereichs 15 anschließt, in dem die Mikroverdampferkanäle 20 angeordnet sind, die am besten in den Figuren 3a bis 3c zu sehen sind.

Der trapezförmige Bereich 15 besitzt am gegenüberliegenden Ende einen Auslassbereich 16, an dem die Dampfsammelkammer 17 anschließt, die mit einem Auslass 18 versehen ist. Die Dampfsammelkammer 17 besitzt ebenfalls eine trapezförmige Gestalt, wobei die Dampfsammelkammer 17 sich vom Auslassbereich 16 des trapezförmigen Bereiches 15 zum Auslass 18 hin verjüngt. Sämtliche Mikrostrukturen haben eine Tiefe von 30 µm.

In der Figur 3a ist ein Ausschnitt des Eintrittsbereichs 14 des trapezförmigen Bereiches 15 vergrößert dargestellt. Eine Vielzahl von Mikroverdampferkanälen 20 in geradliniger Ausführung ist durch eine entsprechende Anzahl von Stegen 21 voneinander getrennt. Die Breite der Stege 21 ist im Eintrittsbereich 14 minimal, so dass die Eintrittsöffnungen der Mikroverdampferkanäle 20 dicht nebeneinander liegen, um auf diese Weise die in der Zuführkammer 13 befindliche Flüssigkeit möglichst schnell aufzunehmen und in die Mikroverdampferkanäle 20 einzuleiten.

Die Mikroverdampferkanäle 20 sind in dieser Ausgestaltung fächerförmig angeordnet, so dass der Abstand der Mikroverdampferkanäle 20 in Richtung Dampfsammelkammer 17 zunimmt, was mit einer entsprechenden Verbreiterung der Stege 21 einhergeht. Dies ist durch einen Vergleich mit den Figuren 3b und 3c erkennbar, die einen Ausschnitt des mittleren Bereichs und des Auslassbereichs 16 des trapezförmigen Bereichs 15 zeigen. Der Querschnitt der Mikroverdampferkanäle 20 ist über die gesamte Länge gleich. Die Querschnittsabmessungen der Mikroverdampferkanäle 20 betragen 30 µm x 30 µm. Auf diese Weise können mehrere hundert Verdampferkanäle, z. B. 200, nebeneinander angeordnet sein.

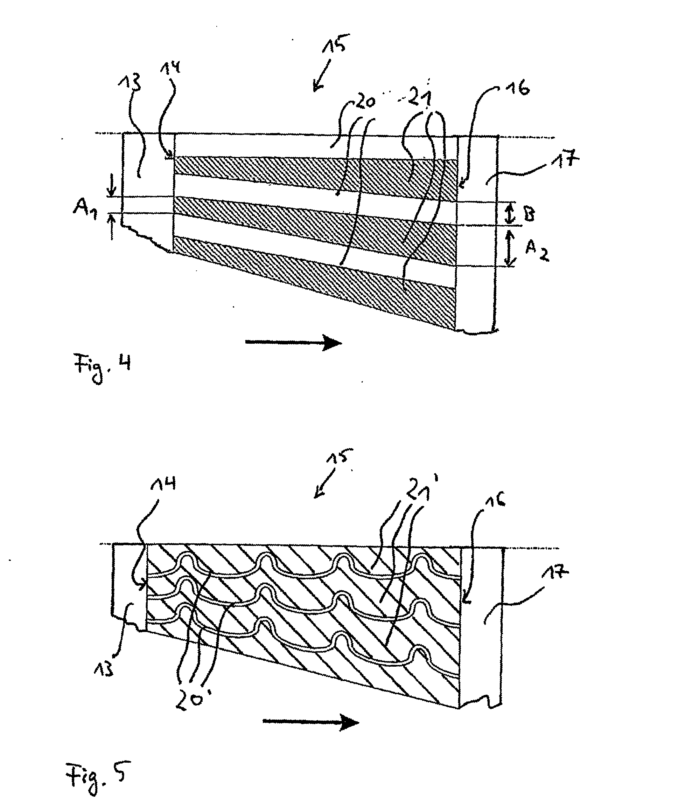

In der Figur 4 ist die in den Figuren 3a bis 3c gezeigte Ausführungsform noch einmal schematisch dargestellt. Es ist zu sehen, dass die Breite B der strahlenförmig bzw. fächerförmig angeordneten Mikroverdampferkanäle 20 über ihre gesamte Länge im trapezförmigen Bereich 15 konstant ist, während die Breite der die Mikroverdampferkanäle 20 trennenden Stege 21 von der Breite A₁ auf die Breite A₂ zunimmt, die ein Vielfaches der Breite B sein kann.

In der Figur 5 ist schematisch eine weitere Ausführungsform der Mikroverdampferkanäle 20' dargestellt, die eine wellenförmige oder mäanderförmige Ausgestaltung aufweisen. Die zu verdampfende Flüssigkeit muss den Windungen der mäanderförmigen Mikroverdampferkanäle 20' folgen und wird aufgrund der Strömung abwechselnd gegen die linke bzw. die rechte Begrenzung der Mikroverdampferkanalwände gedrückt, so dass ein verbesserter Wärmeübergang erzielt werden kann. Gleichzeitig wird bei einer großen Länge der Mikroverdampferkanäle 20' eine kompakte Bauweise erzielt. Auch bei dieser Ausführungsform sind die mäanderförmigen Mikroverdampferkanäle 20' fächerförmig angeordnet, was mit einer Zunahme der Breite der ebenfalls wellenförmig ausgeführten Stege 21' einhergeht.

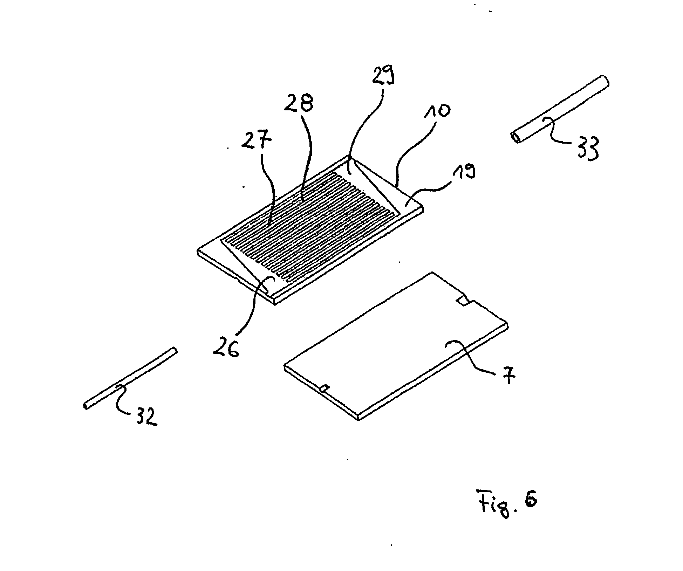

In der Figur 6 ist die Unterseite 19 der Mikroverdampferplatte 10 in vergrößerter Darstellung gezeigt. Die Mikrobeheizungskanäle 27 werden ebenfalls durch Stege 28 von einander getrennt. Es ist eine Vorkammer 26 und eine Nachkammer 29 vorgesehen, die über die Beheizungskanäle 27 miteinander in Verbindung stehen. Diese Kammern 26, 29 dienen zur Verteilung bzw. zur Sammlung des Heizgases, das durch die Mikrobeheizungskanäle 27 strömt. Ferner sind in der Figur 6 noch die Zuführleitung 32 und die Abführleitung 33 für das Heizgas zu sehen, sowie eine Zwischenplatte 7, die lediglich im Bereich der Zu- und Abführung der zu verdampfenden Flüssigkeit bzw. des Dampfes strukturiert ist.

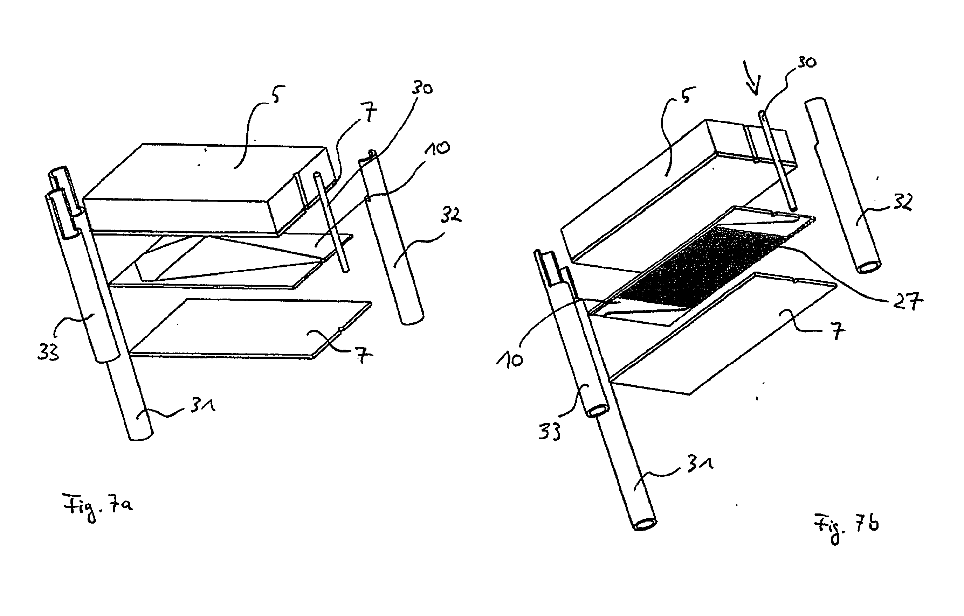

In den Figuren 7a und b ist eine weitere Ausführungsform eines Mikroverdampfers dargestellt, wobei eine Vielzahl von Verdampferplatten 10 vorgesehen sind, die über nicht strukturierte Zwischenplatten 7 von einander getrennt sind. Diese modulartige Bauweise erlaubt den Aufbau eines Mikroverdampfers mit beliebigem Durchsatz.

Der Mikroverdampfer 1 wird nach oben durch eine Deckplatte 5 abgeschlossen. Die Bodenplatte 6 ist in der hier gezeigten Darstellung weggelassen worden. Die Zuführung und Abführung des zu verdampfenden Fluids erfolgt über die Zu-und Abführleitungen 30 und 31, die senkrecht zu den Verdampferplatten 10 angeordnet sind. Die Zuleitung des Heizgases erfolgt über die Zuführleitung 32 und die Abführung des Heizgases über die Abführleitung 33. Die Querschnitte der einzelnen Leitungen 30 bis 33 sind an die Erfordernisse der verwendeten Medien angepasst.

In der Figur 7b ist zu sehen, dass an der Unterseite der Verdampferplatte 10 die Strukturierung der Mikrobeheizungskanäle 27 zu sehen ist.

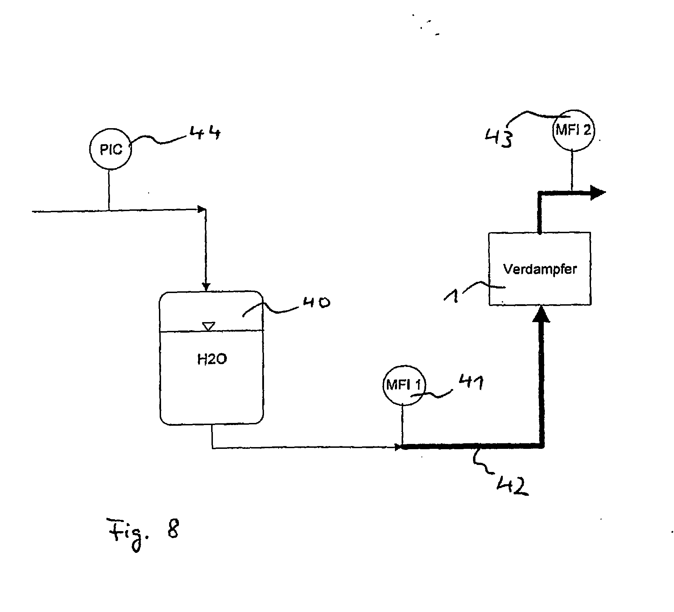

In der Figur 8 ist eine Verdampfungsanlage unter Verwendung eines Mikroverdampfers 1 dargestellt. Die Flüssigkeit (hier Wasser) wurde in einem druckbeaufschlagten Vorlagebehälter 40 bereitgehalten. Der Durchfluss der unverdampften Flüssigkeit wurde mit einem thermischen Massendurchflussregler 41 bestimmt. Nach dem Verdampfen verhindern Begleitheizungen 42 (angedeutet durch fette Pfeile) ein Kondensieren der Flüssigkeit. Die Qualität des erzeugten Dampfes wurde mit einem Coriolisdurchflussmesser 43 bestimmt. Die Menge des verdampften Wassers kann durch den Vordruckregler 44 geregelt werden.

### Bezugszeichenliste

- 1: Mikroverdampfer
- 2: Heizplatte
- 3: Bohrung
- 4: Heizelement
- 5: Deckplatte
- 6: Bodenplatte
- 7: Zwischenplatte
- 8: nutartige Vertiefung

- 10: Mikroverdampferplatte
- 11: Vorderseite
- 12: Einlass
- 13: Flüssigkeitszuführkammer
- 14: Eintrittsbereich
- 15: trapezförmiger Bereich
- 16: Auslassbereich
- 17: Dampfsammelkammer
- 18: Auslass
- 19: untere Seite

- 20, 20', 20": Mikroverdampferkanal
- 21, 21', 21": Steg
- 22: querschnittskleinerer Kanalabschnitt
- 23: querschnittsgrößerer Kanalabschnitt
- 24: Kanalabschnitt
- 25: säulenförmiger Steg
- 26: Vorkammer
- 27: Mikrobeheizungskanal

- 28: Steg
- 29: Nachkammer

- 30: Zuführleitung/Flüssigkeit
- 31: Abführleitung/Dampf
- 32: Zuführleitung/Heizgas
- 33: Abführleitung/Heizgas

- 40: Vorlagebehälter
- 41: Massendurchflussregler
- 42: Begleitheizungen
- 43: Coriolisdurchflussmesser
- 44: Vordruckregler

## Patentansprüche

1. Mikroverdampfer (1) mit einem aus wärmeleitenden Material bestehenden Gehäuse, in dem eine Flüssigkeitszuführkammer (13) und eine Dampfsammelkammer (17) vorgesehen sind, zwischen denen Mikroverdampferkanäle (20, 20', 20") mit Querschnittsabmessungen im Submillimeterbereich in einer Ebene nebeneinander angeordnet sind, sowie mit Mitteln zum Erhitzen der zu verdampfenden Flüssigkeit, **dadurch gekennzeichnet,**
**dass** die Mikroverdampferkanäle (20, 20', 20") in einem trapezförmigen Bereich (15) angeordnet sind, der einen in die Flüssigkeitszuführkammer (13) mündenden querschnittskleineren Eintrittsbereich (14) und einen in die Dampfsammelkammer (17) mündenden querschnittsgrößeren Austrittsbereich (16) aufweist,
**dass** die Mikroverdampferkanäle (20, 20', 20") über ihre gesamte Länge einen konstanten Querschnitt aufweisen und dass die Mikroverdampferkanäle (20, 20', 20") einen Querschnitt von 100 µm² bis 0,0025 mm² aufweisen.

2. Mikroverdampfer nach Anspruch 1, **dadurch gekennzeichnet, dass** die Mikroverdampferkanäle (20, 20', 20") in dem trapezförmigen Bereich (15) fächerförmig angeordnet sind.

3. Mikroverdampfer nach einem der Ansprüche 1 oder 2, **dadurch gekennzeichnet, dass** die Mikroverdampferkanäle (20, 20', 20") einen geradlinigen Verlauf besitzen.

4. Mikroverdampfer nach einem der Ansprüche 1 bis 3, **dadurch gekennzeichnet, dass** die Mikroverdampferkanäle (20, 20', 20") einen mäanderförmigen Verlauf besitzen.

5. Mikroverdampfer nach einem der Ansprüche 1 bis 4, **dadurch gekennzeichnet, dass** der Abstand der Mikroverdampferkanäle (20, 20', 20") in Richtung zur Dampfsammeikammer (17) zunimmt.

6. Mikroverdampfer nach einem der Ansprüche 1 bis 5, **dadurch gekennzeichnet, dass** die Dam pfsammelkam mer (17) ein größeres Volumen aufweist als die Flüssigkeitszuführkammer (13).

7. Mikroverdampfer nach einem der Ansprüche 1 bis 6, **dadurch gekennzeichnet, dass** die Mittel zum Erhitzen mindestens im Bereich unter und/oder über den Mikroverdampferkanälen (20, 20', 20") angeordnet sind.

8. Mikroverdampfer nach einem der Ansprüche 1 bis 7, **dadurch gekennzeichnet, dass** die Mittel zum Erhitzen Mikrobeheizungskanäle (27) umfassen.

9. Mikroverdampfer nach einem der Ansprüche 1 bis 8, **gekennzeichnet durch** mindestens eine Verdampferplatte (10), die auf der Vorderseite (11) die Struktur der Flüssigkeitszuführkammer (13), der Mikroverdampferkanäle (20, 20', 20") und der Dampfsammelkammer (17) aufweist.

10. Mikroverdampfer nach Anspruch 9, **dadurch gekennzeichnet, dass** die Verdampferplatte (10) auf ihrer Rückseite Mikrobeheizungskanäle (27) aufweist.

11. Mikroverdampfer nach Anspruch 10, **dadurch gekennzeichnet, dass** die Mikrobeheizungskanäle (27) Querschnitte von 0,1 mm bis 10 mm aufweisen.

12. Mikroverdampfer nach einem der Ansprüche 10 oder 11, **dadurch gekennzeichnet, dass** die Mikrobeheizungskanäle (27) mit einem Katalysatormaterial beschichtet sind.

13. Mikroverdampfer nach einem der Ansprüche 10 bis 12, **dadurch gekennzeichnet, dass** die Mikrobeheizungskanäle (27) parallel zueinander angeordnet sind.

14. Mikroverdampfer nach einem der Ansprüche 10 bis 13, **dadurch gekennzeichnet, dass** die Ausrichtung der Mikrobeheizungskanäle (27) der Ausrichtung der Mikroverdampferkanäle (20, 20', 20") entspricht.

## Claims

1. A micro-evaporator (1) having a housing comprising heat-conducting material in which a liquid supply chamber (13) and a vapour-collecting chamber (17) are provided, between which chambers micro-evaporator channels (20, 20', 20") having cross-sectional dimensions in the sub-millimetre range are arranged side by side in one plane, and having means for heating the liquid to be evaporated, **characterised**
**in that** the micro-evaporator channels (20, 20', 20") are arranged in a trapezoidal region (15), which has an inlet region (14) of smaller cross-section opening into the liquid supply chamber (13) and an outlet region (16) of larger cross-section opening into the vapour-collecting chamber (17),
**in that** the micro-evaporator channels (20, 20', 20") have a constant cross-section over their entire length and
**in that** the micro-evaporator channels (20, 20', 20") have a cross-section of 100 µm² to 0.0025 mm².

2. A micro-evaporator according to claim 1, **characterised in that** the micro-evaporator channels (20, 20', 20") are arranged in a fan shape in the trapezoidal region (15).

3. A micro-evaporator according to claim 1 or 2, **characterised in that** the micro-evaporator channels (20, 20', 20") have a rectilinear course.

4. A micro-evaporator according to any one of claims 1 to 3, **characterised in that** the micro-evaporator channels (20, 20', 20") have a meandering course.

5. A micro-evaporator according to any one of claims 1 to 4, **characterised in that** the spacing of the micro-evaporator channels (20, 20', 20") increases towards the vapour-collecting chamber (17).

6. A micro-evaporator according to any one of claims 1 to 5, **characterised in that** the vapour-collecting chamber (17) has a larger volume than the liquid supply chamber (13).

7. A micro-evaporator according to any one of claims 1 to 6, **characterised in that** the heating means are arranged at least in the region below and/or above the micro-evaporator channels (20, 20', 20").

8. A micro-evaporator according to any one of claims 1 to 7, **characterised in that** the heating means comprise micro-heating channels (27).

9. A micro-evaporator according to any one of claims 1 to 8, **characterised by** at least one evaporator plate (10), which on its front side (11) has the structure of the liquid supply chamber (13), the micro-evaporator channels (20, 20', 20") and the vapour-collecting chamber (17).

10. A micro-evaporator according to claim 9, **characterised in that** the evaporator plate (11) has micro-heating channels (27) on its rear side.

11. A micro-evaporator according to claim 10, **characterised in that** the micro-heating channels (27) have cross-sections of 0.1 mm to 10 mm.

12. A micro-evaporator according to claim 10 or 11, **characterised in that** the micro-heating channels (27) are coated with a catalyst material.

13. A micro-evaporator according to any one of claims 10 to 12, **characterised in that** the micro-heating channels (27) are arranged parallel to one another.

14. A micro-evaporator according to any one of claims 10 to 13, **characterised in that** the alignment of the micro-heating channels (27) corresponds to the alignment of the micro-evaporator channels (20, 20', 20").

## Revendications

1. Micro-évaporateur (1), avec un boîtier constitué de matériau thermoconducteur dans lequel sont prévues une chambre d'amenée de liquide (13) et une chambre d'accumulation de vapeur (17), entre lesquelles sont disposés, juxtaposés dans un plan, des canaux de micro-évaporateur (20, 20', 20") ayant des dimensions de section submillimétriques, et avec des moyens pour chauffer le liquide à évaporer, **caractérisé**
**en ce que** les canaux de micro-évaporateur (20, 20', 20") sont disposés dans une zone (15) en forme de trapèze, qui présente une région d'entrée (14) de plus petite section débouchant dans la chambre d'amenée de liquide (13) et une région de sortie (16) de plus grande section débouchant dans la chambre d'accumulation de vapeur (17),
**en ce que** les canaux de micro-évaporateur (20, 20', 20") présentent une section constante sur toute leur longueur, et en ce que les canaux de micro-évaporateur (20, 20', 20") présentent une section de 100 µm² à 0,0025 mm².

2. Micro-évaporateur selon la revendication 1, **caractérisé en ce que** les canaux de micro-évaporateur (20, 20', 20") sont disposés en éventail dans la zone (15) en forme de trapèze.

3. Micro-évaporateur selon la revendication 1 ou 2, **caractérisé en ce que** les canaux de micro-évaporateur (20, 20', 20") possèdent une allure rectiligne.

4. Micro-évaporateur selon l'une des revendications 1 à 3, **caractérisé en ce que** les canaux de micro-évaporateur (20, 20', 20") possèdent une allure en méandres.

5. Micro-évaporateur selon l'une des revendications 1 à 4, **caractérisé en ce que** l'espacement des canaux de micro-évaporateur (20, 20', 20") augmente en direction de la chambre d'accumulation de vapeur (17).

6. Micro-évaporateur selon l'une des revendications 1 à 5, **caractérisé en ce que** la chambre d'accumulation de vapeur (17) présente un plus grand volume que la chambre d'amenée de liquide (13).

7. Micro-évaporateur selon l'une des revendications 1 à 6, **caractérisé en ce que** les moyens de chauffage sont disposés au moins dans la région située en dessous et/ou au-dessus des canaux de micro-évaporateur (20, 20', 20").

8. Micro-évaporateur selon l'une des revendications 1 à 7, **caractérisé en ce que** les moyens de chauffage comprennent des canaux de micro-chauffage (27).

9. Micro-évaporateur selon l'une des revendications 1 à 8, **caractérisé par** au moins une plaque d'évaporateur (10) qui présente sur la face avant (11) la structure constituée de la chambre d'amenée de liquide (13), des canaux de micro-évaporateur (20, 20', 20") et de la chambre d'accumulation de vapeur (17).

10. Micro-évaporateur selon la revendication 9, **caractérisé en ce que** la plaque d'évaporateur (10) présente sur sa face arrière des canaux de micro-chauffage (27).

11. Micro-évaporateur selon la revendication 10, **caractérisé en ce que** les canaux de micro-chauffage (27) présentent des sections de 0,1 mm à 10 mm.

12. Micro-évaporateur selon la revendication 10 ou 11, **caractérisé en ce que** les canaux de micro-chauffage (27) sont revêtus d'un matériau catalyseur.

13. Micro-évaporateur selon l'une des revendications 10 à 12, **caractérisé en ce que** les canaux de micro-chauffage (27) sont disposés parallèlement entre eux.

14. Micro-évaporateur selon l'une des revendications 10 à 13, **caractérisé en ce que** l'orientation des canaux de micro-chauffage (27) correspond à l'orientation des canaux de micro-évaporateur (20, 20', 20").
